# EUROPEAN PATENT SPECIFICATION

(11) **EP 3 503 565 B1**
(45) Date of publication and mention of the grant of the patent: **23.03.2022**
(21) Application number: 17210271.7
(22) Date of filing: 22.12.2017
(51) Int. Cl.: H04N 21/422, H04N 21/845, H04N 21/442, H04N 21/454, H04N 21/41

(54) **METHOD FOR DETERMINING OF AT LEAST ONE CONTENT PARAMETER OF VIDEO DATA**
VERFAHREN ZUR BESTIMMUNG WENIGSTENS EINES INHALTSPARAMETERS VON VIDEODATEN
PROCÉDÉ DE DÉTERMINATION D'AU MOINS UN PARAMÈTRE DE CONTENU DE DONNÉES VIDÉO

(43) Date of publication of application: 26.06.2019
(73) Proprietor: Vestel Elektronik Sanayi ve Ticaret A.S., 45030 Manisa (TR)
(72) Inventor: DÖNER, Cagdas, 45030 Manisa (TR)
(74) Representative: Kehl, Ascherl, Liebhoff & Ettmayr Patentanwälte Partnerschaft mbB

(56) References cited:
- US-A1- 2009 150 919
- US-A1- 2012 324 491
- US-A1- 2015 049 591
- US-A1- 2015 067 708
- US-A1- 2015 215 665
- US-A1- 2017 178 692

## Description

The present invention refers according to claim 1 to a method for determining of at least one content parameter of video data, in particular movie or series, and according to claim 9 to a computer program product for executing a method according to any of the preceding claims.

### Background of the invention

Document US 20080214902 A1 discloses an exemplary embodiment providing one or more improvements including a media analysis apparatus and method in which human mental response to media is objectively determined.

In general, a media analysis device and method is described for use in objectively determining a user's emotional response to events in media. In one example, a method for objectively determining a response of a user to at least one event in media experienced by the user is disclosed. In the method a first physiological response is detecting in the user while the user experiences the event and a first physiological response signal is generated in response thereto. A second, different physiological response is also detected in the user while the user experiences the event and a second physiological response signal is generated in response thereto. A scaling factor is applied to a selected one of the physiological response signals. The first and second physiological response signals are used to determine an emotional response of the user to the event. The scaling factor is changed depending on a characteristic of at least one of the first and second physiological response signals.

Document US2015067708A1 discloses systems and methods for generating a representation of a video media asset for inclusion in a media asset listing for the video media asset. User emotional responses that occur while the video media asset is presented to the user are monitored using a processor. A user emotional response selection criterion is retrieved from a storage device, and based on the retrieved user emotional response selection criterion, one of the monitored user emotional responses is selected. An identification is made of the portion of the video media asset presented to the user when the selected one of the user emotional response occurred, and a representation of the identified portion is generated for the video media asset for inclusion in a media asset listing for the video media asset.

Document US2012324491A1 discloses embodiments related to identifying and displaying portions of video content taken from longer video content. In one embodiment, a portion of a video item is provided by receiving, for a video item, an emotional response profile for each viewer of a plurality of viewers, each emotional response profile comprising a temporal correlation of a particular viewer's emotional response to the video item when viewed by the particular viewer. The method further comprises selecting, using the emotional response profiles, a first portion of the video item judged to be more emotionally stimulating than a second portion of the video item, and sending the first portion of the video item to another computing device in response to a request for the first portion of the video item without sending the second portion of the video item.

Document US2015215665A1 discloses a method for synchronized utilization of an electronic device. The method receives closed captioning data from an audio/video content receiver for a set of audio/video content; retrieves detail for a first event occurring in the set of audio/video content, wherein the first event is indicated by the received closed captioning data; and presents content to a user, using the electronic device, based on the retrieved detail.

Document US2017178692A1 discloses a system and method for emotional tagging. A method includes receiving, at a device, biometric data and a timestamp, analyzing the biometric data to determine an emotional reaction occurred, tagging a portion of content with an emotional content tag based on the emotional reaction, wherein the portion of content was playing during a time corresponding to the timestamp, and sending the portion of content and the emotional content tag to a server. A method may include aggregating content tagged as emotional content, generating an emotional content video segment, and providing the emotional content video segment.

Document US2009150919A1 discloses embodiments which enable the correlation between a media instance and physiological responses of human subjects to the media instance. While the subject is watching and/or listening to the media instance, physiological responses are derived from the physiological data collected from the subject. Additionally, audio and/or video signals of the media instance are collected. Program-identifying information is detected in the collected signals to identify the exact segment of the media instance that the subject is listening to and/or watching. The identified segment of the media instance is then correlated with the one or more physiological responses of the subject.

Document CN 103686329 A discloses a synchronous control method and a system, a smart television and wearable devices. The method comprises receiving request signals of constructing wireless communication links, sending answering signals according to the request signals at a set time, acquiring synchronous control triggering signals by the wireless communication links, generating and sending the synchronous control action menu of all control action options of current broadcast contents by the wireless communication links, receiving the actions of the synchronous control action menu and analyzing the control actions of the current broadcast contents, and controlling the current broadcast contents according to the control actions of the current broadcast contents. According to this arrangement, the synchronous control action menu can be synchronized with a smart watch and displayed by the smart watch to achieve remote control of broadcast contents of the smart television, and therefore, effective control of broadcast contents is achieved.

### Object of the invention

It is the object of the present invention to provide a method for better rating respectively classification of content provided by video data.

### Description of the invention

The before mentioned object is solved by a method according to claim 1 for determining of at least one content parameter of video data, in particular movie or series. The method comprises at least the steps: displaying a video with a display device, in particularly a TV. Capturing of at least one value representing a physical parameter of a user with a wearable device, in particularly a smartwatch or constantly capturing of values representing at least the physical parameter of the user with the wearable device, in particularly a smartwatch. Linking the value with a timestamp of the video data or linking values of the constantly captured physical parameter of the user individually with timestamps of the video data. Determining if the value is above or below a predefined threshold or determining an average value of the constantly captured physical parameters and if the average value is above or below a predefined threshold. It is possible that the video data additionally comprises acoustic data. The order of the steps is preferably as introduced before.

This solution is beneficial since an actual physical response to the displayed content can be captured respectively tracked. Thus, it is possible to better rate the content and to better provide suggestions which fit to the watching manner of the specific user and to prevent danger for the user, since scenes or full movies or series can be blocked to prevent critical physical parameters, in particularly high heart rates.

Further preferred embodiments are subject-matter of the dependent claims and of the following specification parts.

The wearable comprises according to a preferred embodiment of the present invention a heart rate sensor for detecting the heart rate of the user, wherein the physical parameter is the heartrate of the user. This embodiment is beneficial since the heart rate can be detected very precisely and is strongly liked to emotions like thrill and fear.

The wearable is according to a further preferred embodiment of the present invention a smartwatch. The smartwatch preferably has a touch display and displays data related to the movie or series represented by the video data. The smartwatch further preferably provides a communication means, in particularly Bluetooth or WLAN or NFC, for communicating with further devices, in particularly via the internet.

The wearable and display device are according to another embodiment of the present invention connected to a server device, in particularly the same server device, and/or are directly or preferably at least indirectly connected with each other. This embodiment is beneficial since a user can access multiple video data file via the internet and preferably via multiple devices at the same time. Thus, the video data is preferably provided via streaming.

Analyzing the timestamp and heart rate values is carried out according to another preferred embodiment of the present invention. The analysis preferably comprises the identification of scenes in which the value representing the physical parameter was above the threshold. Scenes are hereby preferably understood as parts of the respective movie or series.

According to a further preferred embodiment of the present invention the values, which represent the physical parameter are stored in a cloud server. This enables a preferred further step of the present invention which comprises registering of multiple users to the cloud server, and the step of identifying the individual values or one or at least one or exactly one average value which represent the physical parameter of the respective user with respect to individual movies or series or the step of displaying a table of movies or series and displaying an average value of the physical parameter of concrete users or an average user. This embodiment is beneficial since the values can be processed to provide one ore multiple average user groups and/or to be accessible by different users, in particularly concrete users. Concrete users may be family members or friends or famous persons. Average user can be predefined, like all users of a specific age and/or all users with specific interests and/or all users who watched a predefined number of the same or similar movies.

A further embodiment of the present invention comprises the step of displaying a notification by means of the display device, wherein the notification is based on specific or average heart rate data linked to at least one specific timestamp and preferably linked to multiple specific timestamps of the video data, wherein the notification is displayed prior to a specific scene of the video data, wherein the specific scene is identified by means of the at least one specific timestamp. This embodiment is beneficial since the user can prevent watching scenes which are of such a type that they would affect, in particularly increase, the heart rate of the user. Thus, the present invention helps to avoid unnecessary risks during media consumption.

The invention further comprises the step of blocking of one or multiple specific scenes in case the measured heart rate is above a predefined heartrate threshold or on a predefined level, wherein the average heartrate of a concrete user or an average user of the specific scene was above the heartrate threshold. The heart rate of the user is preferably measured prior to the displaying of the specific scene. This embodiment is beneficial since the system preferably automatically avoids stress to the user. Thus, also in cases the user fell in sleep and wakes up right before a scene which caused a heart rate of the average user or of concrete users above the threshold, the user is prevented from immediate stress since the scene is blocked.

The present invention comprises the step of detecting movements of the wearable device by means of at least one motion sensor, wherein capturing of physical parameters of the user is paused in case sensor data generated by the sensor represents movements of the user, wherein said movements are identified as walking or running movements. This embodiment is beneficial since falsifying of the captured values can be prevented. In case a user stands up from a seat or sofa the heart rate normally increases, thus it is preferably avoided that such an increasing of the heart rate is linked to a specific scene, movie or series.

The sensor is according to another embodiment of the present invention at least one acceleration sensor and/or one gyroscope sensor, in particularly inertial sensor. The smartwatch or wearable preferably comprises at least three or up to three or three acceleration sensors and at least three or up to three or three gyroscope sensors. The smartwatch or wearable preferably analyzes preferably up to six or six motion sensors to determine walking or running. Thus, it can be reliably determined if the user is in a static position or moves.

The present invention preferably further comprises the step of detecting sleep of the user by means of the heart rate sensor and/or motion sensor, wherein the capturing of physical parameters is paused in case sleep is detected. This embodiment is beneficial since the heart rate during sleep is uncoupled from the displayed scene, movie or series. Thus, it can be prevented that the captured values are falsified.

The above-mentioned object is also solved by a computer program product for executing of a method according to any of the preceding claims.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figures. In the following the invention is just exemplarily described with respect to the attached figures.

### Brief Description of the Drawings

- Fig. 1: shows a data connection between a wearable and a cloud server and a display device, in particularly a TV, and the cloud server;
- Fig. 2: shows a wearable device that outputs information with respect to a physical parameter of a user and with respect to a selected or currently view movie or series;
- Fig. 3: shows a table that links a physical parameter of a specific person, in particular the user, with timestamps of a movie or series and also provides information about an average value of the physical parameter at the respective timestamp; and
- Fig. 4: shows a first and a second notification screen.

### Detailed Description of the Drawings

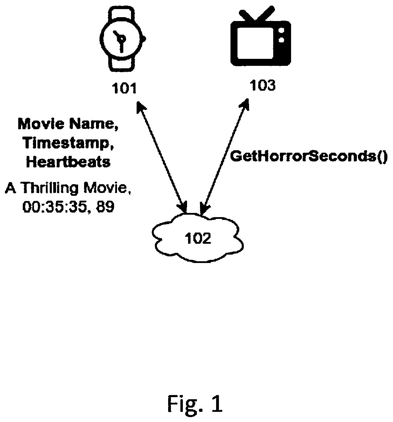

Figure 1 shows a smart watch 101 that measures the user's heartbeats and matches them with a timestamp of a video stream. 103 represents the TV that plays a current stream. Current stream technologies have the capability of synching the watching stream on several devices like mobile phone, TV and smart watches 101. So, both devices will be in touch with respectively connected to a cloud server as denoted in 102.

Further, Figure 1 implicitly describes the communication API for communication between wearable device 101, 300, in particularly smart watch, and cloud server 102 and between display device 103, 201, in particularly TV, and cloud server 102, some functions would be declared.

Smart watches (as wearables) 101, 300 are able to be used to track user biometrics (health related attributes) like blood pressure, heart rate and/or body fat etc. Heart rate sensor has a very smart usage like tracking user's light and deep sleep durations as heart rate goes lower once user passes to sleeping.

Beyond these biometrics, as it is called smart (watch), it has various device integration ability with smart TV's, smartphones, etc.

Nowadays, video streaming applications has a widespread usage on smart TV's like Netflix, Amazon, Hulu etc. These applications have both smart watch 101, 300 and smart TV implementations so they can be controlled via each of them as they go synchronized when user starts to watch a video. I.e. you can follow up the watching status of a Netflix video from both TV and mobile phone just at the same time.

According to Figure 1 the wearable device 101 displays information with respect to multiple categories, like movie name, timestamp, and heart rate of person the person wearing the wearable. Currently the smart watch 101 posts the movie name, currently watching movie timestamp and the user's current heartbeat to store the heartbeat measurements with the given movie name or linked to the respective movie name into the cloud system respectively server. The display device, in particularly TV, tablet pc, laptop, smartphone, beamer, can request heartbeat information (second by second) about the movie before it starts or it can just grabs some average heartbeat, horror/excitement index or target age information. TV can use an API call like GetHorrorSeconds() to receive time and heartrate data, in particularly timestamps of the movie or series which match with heartbeats of the users' average or an average user.

This data can be shared between friends and user can use the reference of one of his/her friend's heartbeat changes as a specific horror index or the heartbeat changes of multiple friends as the average horror index (reference).

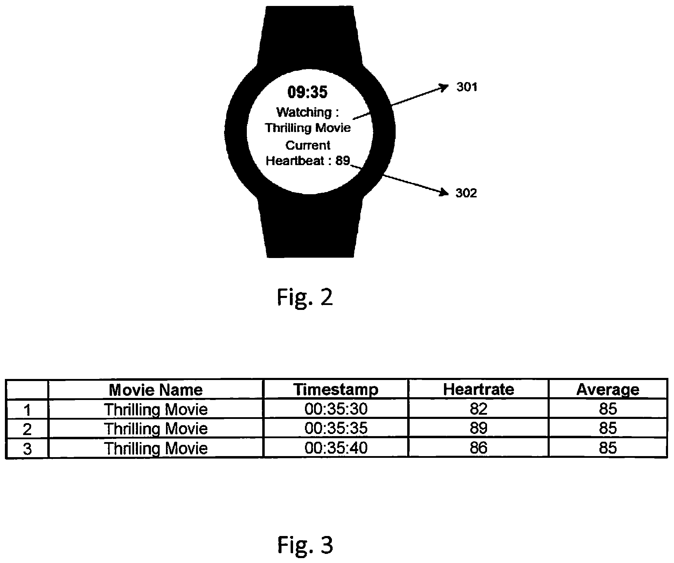

Figure 2 shows a smart watch 101, 300. 301 is a label on the watch to demonstrate the currently watching movie. This info can be gathered with the capability of client synchronization of the streaming servers. I.e. Netflix can get sync the current stream on both TV's and mobiles phones.

Figure 3 shows a table of captured heartrates linked to timestamps of specific movies to illustrate the invention.

After data being gathered, there will be a thrilling/excitement rate or ratio that is collected, preferably into the cloud depending and comparing with other movies. This rate can be demonstrated into IMDB (International Movie Database) or Netflix's own database to make the users know about the scaring/thrilling level of the movie before they watch it. So, each user's data can be stored into a database to generate an average result or interpreting these results depending on age scale/scope. Database table can have a shape and attributes like illustrated. Thrilling/horror scenes can be notified earlier to the watchers by collected thrilling info. A thrilling scene informing notification can be shown before the scenes to inform children or scared person etc. To decide to show notification, user's current heartbeat would be measured and if it is really high, scene also could be blocked to not create heart problems.

Thus, not only the whole movie but also in each scene or multiple scenes measurement of increased/changed heartbeat rate with respect to a specific timestamp of the video/movie can be detected. If user heart rate gets higher when comparing to other movies, it means user is getting excited or thrilled, so the respective movie can be marked as a thrilling movie. For validation, multiple heart rate data measured from multiple users can be used. Also, it can be demonstrated as an average heartbeat changes on each movie.

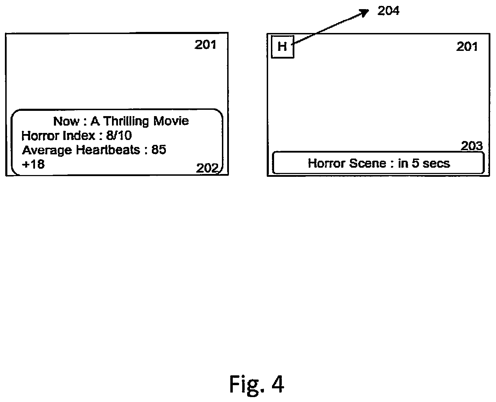

Figure 4 indicates a TV as 201, wherein a user watches a movie on it. 202 is a basic Info Bar in the TV.

The info bar may show multiple different information categories at the same time and/or in a row. The information categories are preferably provided by the wearable and/or by the server, in particularly cloud server or cloud server database. Horror index is preferably generated by the average of the movie heartbeat that is collected from all users. So, it is possible to decide if a movie is scary/exciting or not by collecting the info from all watchers or predefined groups of watchers. Average heartbeat is also preferably gathered from the server respectively cloud server database as it is recorded in the database. Age field is seen as +18 in the figure but it is not a must to store it in the database.

It is further possible that the actual heart beat or heart rate of a user is transferred from the wearable directly to the display means or via the server, in particularly cloud server, to the display means and displayed as part of the notification.

Reference number 203 indicates an additional or alternative pop-up notification that warns the user about an incoming exciting/horror/thrilling scene. That is preferably generated from the data that is gathered from the server respectively the cloud server. 204 is an icon or symbol or effect that informs the user about that coming scene, wherein a heartbeat rate, which is marked as high heart beat rate, is associated with that coming scene. If the heartbeat rate is above a predefined threshold the scene can be blocked. The high heartbeat rate, informs the users that the scene can be scary/exciting/horror/shocking.

However, it is possible to adapt the present method to different video data, in particularly files or stream, which represent movie or series genres. So, it is possible to interpret the watching scene as too dramatic in a drama or too romantic in a romance or to romantic in a thriller or to thrilling in a drama, etc.

Thus, the present invention refers to a method for determining a content parameter of video data, in particular a movie or series or a specific TV program. The method preferably comprises the steps: displaying a video with a display device 103, 201, in particularly a TV, capturing of at least one value representing a physical parameter of a user with a wearable device 101, 300, in particularly a smartwatch, linking the value with a timestamp of the video data, determining if the value is above or below a predefined threshold. This solution is beneficial since it provides a possibility to track user's heartbeat level changes while he/she is watching a movie. User's current watching movie/video information is easily gatherable via a smart watch as it has the application like Netflix has.

Once the user's heartbeats are tracked on several movie scenes or on the whole movie by taking average, it is possible to rate a movie as exciting/thrilling/horror or not.

### List of reference numbers

- 101, 300: wearable device
- 102: server
- 103, 201: displaying device
- 202: info bar, notification about current state
- 203: info bar, notification about upcoming state
- 302: heart rate

## Claims

1. Method for determining a content parameter of video data, in particular a movie or series, at least comprises the steps:
displaying a video with a display device (103, 201), in particularly a TV,
constantly capturing values representing the heartrate of a user by means of a heart rate sensor of a wearable device (101, 300), in particularly a smartwatch,
linking values of the constantly captured heartrate of the user individually with timestamps of the video data,
determining if a captured value is above or below a predefined heartrate threshold
and
detecting movements of the wearable device (101, 300) by means of at least one motion sensor,
wherein capturing of physical parameters of the user is paused in case sensor data generated by the sensor represents movements of the user, wherein said movements are walking or running movements, wherein the wearable device comprises the motion sensor
displaying a notification by means of the display device (103, 201),
wherein the notification is based on average heart rate data linked to at least one specific timestamp and preferably linked to multiple specific timestamps of the video data,
wherein the notification is displayed prior to a specific scene of the video data,
wherein the specific scene is identified by means of the at least one specific timestamp
and
blocking the specific scene in case the measured heart rate of the user is above the predefined heartrate threshold and the average heartrate of an average user of the specific scene was above the predefined heartrate threshold.

2. Method according to any of the preceding claims,
wherein the wearable device (300) is a smartwatch, wherein the smartwatch (300) has a touch display and displays data related to the movie or series represented by the video data.

3. Method according to any of the preceding claims,
wherein the wearable device (101, 300) and display device (103, 201) are connected to the same server device (102) and/or are directly connected with each other.

4. Method according to any of the preceding claims,
comprising the step of analyzing the timestamp and heart rate values,
wherein the analysis comprises the identification of scenes in which the value representing the physical parameter was above the threshold.

5. Method according to any of the preceding claims,
comprising the step of storing the values which represent the physical parameter in a cloud server (102).

6. Method according to claims 3 to 5,
comprising the step of registering multiple users to the cloud server (102), and
identifying the individual values or an average value which represent the physical parameter of the respective user with respect to individual movies or series,
or
displaying a table of movies or series and displaying an average value of the physical parameter of concrete users or an average user.

7. Method according to the preceding claim,
wherein the sensor is at least one acceleration sensor, in particularly inertial sensor.

8. Method according to any of the claims 1 to 7,
comprising the step of detecting sleep of the user by means of the heart rate sensor and/or motion sensor, wherein the capturing of physical parameters is paused in case sleep is detected.

9. Computer program product for executing of a method according to any of the preceding claims.

## Patentansprüche

1. Verfahren zur Bestimmung eines Inhaltsparameters von Videodaten, insbesondere eines Films oder einer Serie,
umfasst mindestens die Schritte:
Anzeigen eines Videos mit einer Anzeigevorrichtung (103, 201), insbesondere einem Fernsehgerät, Ständiges Erfassen von die Herzfrequenz eines Nutzers repräsentierenden Werten mittels eines Herzfrequenzsensors eines tragbaren Geräts (101, 300), insbesondere einer Smartwatch,
Verknüpfen von Werten der laufend erfassten Herzfrequenz des Nutzers individuell mit Zeitstempeln der Videodaten,
Ermitteln, ob ein erfasster Wert über oder unter einer vordefinierten Herzfrequenzschwelle liegt und
Erfassen von Bewegungen des tragbaren Geräts (101, 300) mittels mindestens eines Bewegungssensors, wobei das Erfassen von physikalischen Parametern des Benutzers pausiert wird, wenn vom Sensor erzeugte Sensordaten Bewegungen des Benutzers darstellen, wobei die Bewegungen Geh- oder Laufbewegungen sind, wobei das tragbare Gerät den Bewegungssensor umfasst
Anzeigen einer Benachrichtigung mit Hilfe der Anzeigevorrichtung (103, 201),
wobei die Benachrichtigung auf durchschnittlichen Herzfrequenzdaten basiert, die mit mindestens einem spezifischen Zeitstempel und vorzugsweise mit mehreren spezifischen Zeitstempeln der Videodaten verknüpft sind,
wobei die Benachrichtigung vor einer bestimmten Szene der Videodaten angezeigt wird,
wobei die spezifische Szene mittels des mindestens einen spezifischen Zeitstempels identifiziert wird und
Sperren der spezifischen Szene für den Fall, dass die gemessene Herzfrequenz des Benutzers über dem vordefinierten Herzfrequenz-Schwellenwert liegt und die durchschnittliche Herzfrequenz eines durchschnittlichen Benutzers der spezifischen Szene über dem vordefinierten Herzfrequenz-Schwellenwert lag.

2. Verfahren nach einem der vorhergehenden Ansprüche,
wobei das tragbare Gerät (300) eine Smartwatch ist, wobei die Smartwatch (300) ein Touch-Display hat und Daten, die sich auf den Film oder die Serie beziehen, anzeigt, die durch die Videodaten dargestellt werden.

3. Verfahren nach einem der vorhergehenden Ansprüche,
wobei die tragbare Vorrichtung (101, 300) und die Anzeigevorrichtung (103, 201) mit der gleichen Servervorrichtung (102) verbunden sind und/oder direkt miteinander verbunden sind.

4. Verfahren nach einem der vorangehenden Ansprüche,
mit dem Schritt des Analysierens der Zeitstempel und Herzfrequenzwerte,
wobei die Analyse die Identifikation von Szenen umfasst, in denen der den physikalischen Parameter repräsentierende Wert oberhalb des Schwellenwertes lag.

5. Verfahren nach einem der vorangehenden Ansprüche,
umfassend den Schritt des Speicherns der Werte, die den physikalischen Parameter darstellen, in einem Cloud-Server (102).

6. Verfahren nach einem der Ansprüche 3 bis 5,
mit dem Schritt des Registrierens mehrerer Benutzer auf dem Cloud-Server (102), und Identifizieren der einzelnen Werte oder eines Durchschnittswertes, der den physikalischen Parameter des jeweiligen Nutzers in Bezug auf einzelne Filme oder Serien repräsentiert,
oder
Anzeigen einer Tabelle von Filmen oder Serien und Anzeigen eines Durchschnittswertes des physikalischen Parameters von konkreten Nutzern oder eines durchschnittlichen Nutzers.

7. Verfahren nach dem vorhergehenden Anspruch,
wobei der Sensor mindestens ein Beschleunigungssensor, insbesondere Inertialsensor, ist.

8. Verfahren nach einem der Ansprüche 1 bis 7,
umfassend den Schritt des Erkennens des Schlafs des Benutzers mittels des Herzfrequenzsensors und/oder des Bewegungssensors, wobei die Erfassung der physikalischen Parameter im Falle des Erkennens von Schlaf pausiert wird.

9. Computerprogrammprodukt zum Ausführen eines Verfahrens nach einem der vorhergehenden Ansprüche.

## Revendications

1. Méthode pour déterminer un paramètre de contenu de données vidéo, en particulier un film ou une série,
comprenant au moins les étapes suivantes
affichage d'une vidéo avec un dispositif d'affichage (103, 201), en particulier un téléviseur, capturer en permanence des valeurs représentant la fréquence cardiaque d'un utilisateur au moyen d'un capteur de fréquence cardiaque d'un dispositif portable (101, 300), en particulier une smartwatch,
relier individuellement les valeurs de la fréquence cardiaque de l'utilisateur capturées en permanence avec les horodatages des données vidéo,
déterminer si une valeur capturée est supérieure ou inférieure à un seuil de fréquence cardiaque prédéfini
et
détecter les mouvements du dispositif portable (101, 300) au moyen d'au moins un capteur de mouvement, dans lequel la capture des paramètres physiques de l'utilisateur est interrompue dans le cas où les données du capteur générées par le capteur représentent des mouvements de l'utilisateur, dans lequel lesdits mouvements sont des mouvements de marche ou de course, dans lequel le dispositif portable comprend le capteur de mouvement
afficher une notification au moyen du dispositif d'affichage (103, 201),
dans lequel la notification est basée sur des données de fréquence cardiaque moyenne liées à au moins un horodatage spécifique et de préférence liées à plusieurs horodatages spécifiques des données vidéo,
dans lequel la notification est affichée avant une scène spécifique des données vidéo,
dans lequel la scène spécifique est identifiée au moyen de l'au moins un horodatage spécifique et
bloquer la scène spécifique dans le cas où la fréquence cardiaque mesurée de l'utilisateur est supérieure au seuil de fréquence cardiaque prédéfini et la fréquence cardiaque moyenne d'un utilisateur moyen de la scène spécifique était supérieure au seuil de fréquence cardiaque prédéfini.

2. Méthode selon l'une quelconque des revendications précédentes,
dans lequel le dispositif portable (300) est une smartwatch, dans lequel la smartwatch (300) a un écran tactile et affiche des données relatives au film ou à la série représentée par les données vidéo.

3. Méthode selon l'une quelconque des revendications précédentes,
dans lequel le dispositif portable (101, 300) et le dispositif d'affichage (103, 201) sont connectés au même dispositif serveur (102) et/ou sont directement connectés l'un à l'autre.

4. Méthode selon l'une quelconque des revendications précédentes,
comprenant l'étape d'analyse de l'horodatage et des valeurs de fréquence cardiaque,
dans lequel l'analyse comprend l'identification des scènes dans lesquelles la valeur représentant le paramètre physique était supérieure au seuil.

5. Méthode selon l'une quelconque des revendications précédentes,
comprenant l'étape de stockage des valeurs qui représentent le paramètre physique dans un serveur cloud (102).

6. Méthode selon les revendications 3 à 5,
comprenant l'étape d'enregistrement de plusieurs utilisateurs sur le serveur en nuage (102), et identifier les valeurs individuelles ou une valeur moyenne qui représentent le paramètre physique de l'utilisateur respectif en ce qui concerne les films individuels ou les séries,
ou
afficher un tableau de films ou de séries et afficher une valeur moyenne du paramètre physique d'utilisateurs concrets ou d'un utilisateur moyen.

7. Méthode selon la revendication précédente,
dans lequel le capteur est au moins un capteur d'accélération, en particulier un capteur inertiel.

8. Méthode selon l'une quelconque des revendications 1 à 7,
comprenant l'étape de détection du sommeil de l'utilisateur au moyen du capteur de fréquence cardiaque et/ou du capteur de mo- tion, dans lequel la capture des paramètres physiques est mise en pause en cas de détection de sommeil.

9. Produit programme d'ordinateur pour l'exécution d'une méthode selon l'une quelconque des revendications précédentes.
